# DEMANDE DE BREVET EUROPEEN

(11) **EP 4 631 783 A1**
(43) Date de publication de la demande: **15.10.2025**
(21) Numéro de dépôt: 25163107.3
(22) Date de dépôt: 11.03.2025
(51) Int. Cl.: B60N 2/58, B60N 2/70

(54) **GARNITURE DE SIÈGE EN POLYESTER**

(30) Priorité: 29.03.2024 FR 2403270
(71) Demandeur: FAURECIA Sièges d'Automobile, 92000 Nanterre (FR); Indorama Ventures Mobility Obernburg GmbH, 63784 Obernburg (DE)
(72) Inventeur: CLUET, Mathieu, 91150 ETAMPES (FR); GAZANIOL, Benoît, 91290 ARPAJON (FR); BOQUET, Mathieu, 91370 VERRIERES LE BUISSON (FR)
(74) Mandataire: Plasseraud IP

(57) **Abrégé**

L'invention concerne une garniture 3 comprenant :
- Une première couche de matelassure 31 comprenant un enchevêtrement 3D de fibres de polyester, continues disposées irrégulièrement formant des boucles soudées entre elles,
- Une coiffe 32 comprenant :
• Une deuxième couche 33 comprenant des fibres de polyester non-tissés,
• Une troisième couche 34 d'aspect comprenant des fibres de polyester tissées entre-elles,

chacune des première et deuxième couches comprenant au moins 95% de polyester, la troisième couche comprenant au moins 92% de polyester.

## Description

### Domaine technique

La présente divulgation relève du domaine des sièges de véhicules automobiles qui comprennent au moins une garniture, typiquement fixée à une structure de siège. La garniture comporte une couche de matelassure qui participe au confort du siège, et une coiffe, qui joue notamment un rôle de finition en recouvrant la matelassure. La coiffe comprenant généralement au moins une couche de tissu d'aspect.

La présente divulgation est relative à une garniture de siège, en particulier de dossier de siège, qu'il est tout de même également possible d'appliquer à une partie d'assise de siège. La présente divulgation concerne également un siège comprenant une telle garniture, ainsi qu'un procédé de recyclage d'une telle garniture.

### Technique antérieure

Les garnitures sont classiquement réalisées au moins en partie en mousse de polymère d'uréthane (ou polyuréthane, PU), notamment en mousse de polyuréthane obtenue à partir de polyols de type polyéther/polyol (ou PUR). De telles mousses peuvent être mises en forme dans des moules de manière relativement aisée, pour former différentes formes de matelassures pour différents éléments de siège de véhicule, comme l'assise, le dossier, l'accoudoir ou l'appui-tête, par exemple.

Les matelassures en mousse de polyuréthane donnent satisfaction, mais peuvent conserver l'humidité, notamment en condition humide. Ceci peut induire une sensation d'inconfort pour un occupant du siège de véhicule dont un élément comprend une telle matelassure.

En outre, une mousse de polyuréthane est classiquement réalisée en mélangeant, entre autres, des polyols avec des isocyanates. La réaction chimique mise en œuvre émet du CO2 pour former une mousse, le CO2 émis contribuant au réchauffement climatique.

De plus, une mousse de polyuréthane n'est pas recyclable. De ce fait, en fin de vie, les sièges sont déstructurés pour être triés de façon à séparer les éléments de matières différentes recyclables, et à extraire les éléments non recyclables. Les éléments recyclables sont ensuite broyés, pour former une nouvelle matière première, alors que les éléments non recyclables sont typiquement enfouis, ou brulés si possible pour générer de l'énergie.

Ainsi, il apparaît souhaitable de limiter l'utilisation de polyuréthane dans les garnitures de siège de véhicule, tout en garantissant un niveau équivalent de prestation, notamment du point de vue du confort et de l'aspect du siège.

### Résumé

La présente divulgation vient améliorer la situation.

Selon un premier aspect, il est proposé une garniture comprenant :
- Une première couche de matelassure comprenant un enchevêtrement 3D de fibres de polyester, continues disposées irrégulièrement formant des boucles soudées entre elles,
- Une coiffe comprenant :
   ∘ Une deuxième couche comprenant des fibres de polyester non-tissés,
   ∘ Une troisième couche d'aspect comprenant des fibres de polyester tissées ou tricotées entre-elles,
chacune des première et deuxième couches comprenant au moins 95% de polyester, la troisième couche comprenant au moins 92% de polyester.

Ainsi, pour les raisons évoquées ci-dessous, la garniture selon la présente divulgation est entièrement faite de matière recyclable et présente un taux d'émission de CO2 réduit par rapport à l'art antérieur.

Selon un deuxième aspect, il est proposé un siège de véhicule comprenant une partie de dossier et une partie d'assise liées à une structure de siège de véhicule, au moins l'une des parties de dossier et d'assise comprenant une garniture selon le premier aspect.

Selon des exemples, le siège selon le deuxième aspect comprend une interface fixée à la structure du siège, l'interface comprenant une zone d'accrochage. Selon des exemples, la garniture est posée sur ladite interface du côté de la première couche de matelassure, de façon à ce que la première couche soit la plus proche de l'interface comparée aux deuxième et troisième couches, la première couche et la deuxième couche comprenant des passages, la troisième couche comprenant un élément d'accroche apte à coopérer avec la zone d'accrochage, ledit élément d'accroche atteignant la zone d'accrochage pour assurer la fixation de la troisième couche en passant à travers lesdits passages de la première couche et de la deuxième couche. Ainsi, la première couche est prise en sandwich entre l'interface et la troisième couche, la première couche n'étant pas directement fixée à l'interface ni à la structure du siège.

Selon des exemples, l'interface peut être du type d'un support plastique, autrement appelé « carrier ».

Selon d'autres exemples, l'interface peut être du type d'une nappe de suspension métallique.

Selon des exemples, l'interface peut être une interface de dossier ou une interface d'assise.

Selon un troisième aspect, il est proposé un procédé de fabrication d'une garniture dans lequel la fabrication de la première couche comprend :
- /A1/ Extrusion d'un polymère thermoplastique dans une filière d'extrusion comprenant des buses d'extrusion réparties suivant une direction en longueur et suivant une direction en largeur de la filière d'extrusion, générant un rideau de fibres continues fondues, chutant par gravité,
- /A2/ Réception du rideau de fibres continues fondues chutant par gravité sur un ou des élément support avec une génération d'un enchevêtrement 3D de fibres disposées irrégulièrement avec fusion de boucles entre les fibres continues,
- /A3/ éventuellement solidification de l'enchevêtrement 3D de fibres par immersion dans un liquide de refroidissement.

Selon un quatrième aspect, il est proposé un procédé de fixation d'une garniture selon la présente divulgation, sur un siège de véhicule selon le deuxième aspect, le siège comprenant une interface comprenant une zone d'accrochage, le procédé de fixation comprenant :
- /B1/ Pose de la première couche de matelassure sur l'interface,
- /B2/ Passage de l'élément d'accroche à travers le passage de la première couche de matelassure pour le fixer aux zones d'accrochage de l'interface.

Selon un perfectionnement, le procédé de fixation de la garniture sur le siège de véhicule peut comprendre en /B3/ la fixation des bords périphériques de la coiffe sur l'interface par coopération entre une partie rigide de rembordement de la coiffe et une zone de fixation périphérique de l'interface.

Selon un cinquième aspect, il est proposé un procédé de recyclage d'un siège de véhicule selon le deuxième aspect, comprenant :
- Séparation de l'au moins une garniture de la structure de siège,
- Broyage de l'entièreté de l'au moins une garniture, sans opération préalable de séparation de couche ou d'élément de couche, en vue d'obtenir du polyester sous forme de granulés,
- Réutilisation d'au moins une partie des granulés de polyester pour la fabrication d'un produit comprenant du polyester.

Les caractéristiques exposées dans les paragraphes suivants peuvent, optionnellement, être mises en œuvre, indépendamment les unes des autres ou en combinaison les unes avec les autres :

Selon un perfectionnement, la coiffe consiste en :
∘ Une deuxième couche comprenant des fibres de polyester non-tissés,
∘ Une troisième couche d'aspect comprenant des fibres de polyester tissées ou tricotées entre-elles,
la deuxième couche comprenant au moins 95% de polyester, et la troisième couche comprenant au moins 92% de polyester.

Selon un perfectionnement, la coiffe comprend au moins 92% de polyester, préférentiellement au moins 95% de polyester, préférentiellement au moins 96% de polyester, préférentiellement au moins 98% de polyester.

Selon un perfectionnement, chaque couche de la coiffe comprend au moins 92% de polyester.

Selon un perfectionnement, chaque couche de la coiffe est constituée uniquement de polyester et de fil de couture en polyester ou d'un autre matériau, par exemple en polyamide, et optionnellement d'un ou plusieurs moyens d'accroches en polyester ou en un autre matériau plastique.

Selon un perfectionnement, la coiffe ne comprend pas de rayonne viscose.

Selon un perfectionnement, la coiffe ne comprend pas de polyuréthane.

Selon un perfectionnement, la coiffe comprend, en addition d'une deuxième couche comprenant des fibres de polyester non-tissés et d'une troisième couche comprenant des fibres de polyester tissées ou tricotées entre-elles, une ou plusieurs couches additionnelles comprenant chacune au moins 92% de polyester.

Une couche additionnelle peut être, selon un exemple, une couche d'une épaisseur relativement fine par rapport à celles des deuxièmes et troisièmes couches, par exemple comprise entre 0,5 et 1mm. Une telle couche additionnelle peut être positionnée entre la coiffe et la première couche de la garniture.

De manière générale, il est entendu que le terme « couche » au sens de la présente divulgation désigne une couche de garniture comprenant des fibres. Celles-ci pouvant être intissée, tissée ou tricotée, ou enchevêtrées entre elles.

Selon un perfectionnement, la deuxième couche et la troisième couche de la coiffe, et d'éventuelles couches supplémentaires, comprennent chacune au moins 92% de polyester.

Selon un perfectionnement, la deuxième couche comporte au moins 98% de fibres polyester non-tissées.

En particulier, la masse surfacique de la deuxième couche peut être comprise entre 180g/m² pour une épaisseur 2,5mm et 400 g/m² pour une épaisseur 4,3mm.

Selon des exemples, la deuxième couche peut être collée à la troisième couche, préférentiellement avec une colle thermofusible. La colle peut comprendre au moins 95% de polyester. La deuxième couche peut être collé à la troisième couche par un procédé de collage à chaud.

Dans des exemples, la coiffe peut comprendre un ou plusieurs éléments d'accroche, configuré pour fixer la coiffe à la première couche de matelassure, ou à une interface d'un siège de véhicule. Les éléments d'accroche peuvent être par exemple cousus, ou collés, à une face intérieure de la coiffe, la face intérieure faisant face à une interface du siège et étant opposée à une face extérieure qui reçoit l'occupant du siège. L'élément d'accroche peut comprendre au moins 95% de polyester.

Selon des exemples, les éléments d'accroche peuvent être du type des rappels de garnissage, aussi appelés « tie-down » en anglais. La garniture peut comprendre un ou plusieurs éléments d'accroche.

Dans des exemples, la première couche de matelassure peut comprendre une ou plusieurs zones locales densifiées et rigidifiées par pressage à chaud de l'enchevêtrement 3D, les éléments d'accroche de la deuxième couche étant configurés pour coopérer avec lesdites zones locales pour fixer la coiffe à la première couche de matelassure. Par exemple, les éléments d'accroche peuvent comprendre un ensemble de crochets, et/ou une ou des pointe munie de crochet venant accrocher des boucles de l'enchevêtrement 3D de la couche de matelassure au niveau des zones locales densifiées et rigidifiées.

Dans d'autres exemples, la coiffe peut être liée à l'armature de siège par les éléments d'accroche. De manière optionnelle, la coiffe peut alors ne pas être liée à la première couche de matelassure.

Selon encore d'autres exemples, la première couche de matelassure comprend un passage traversant, l'élément d'accroche étant configuré pour coopérer avec une zone d'accrochage de l'interface du siège de véhicule en passant à travers le passage de la première couche de matelassure.

Selon des exemples, la première couche de matelassure est posée sur une interface de siège de véhicule, et la coiffe recouvre la première couche de matelassure en venant se fixer à l'interface par un ou plusieurs éléments d'accroche. Les éléments d'accroche traversent la première couche de matelassure pour atteindre des zones d'accroches de l'interface.

Selon des exemples, le siège comprend une interface comprenant une zone de fixation périphérique, et la coiffe comprend une partie rigide de rembordement. Ladite zone de fixation périphérique de l'interface du siège étant configurée pour coopérer avec ladite partie rigide de la coiffe pour fixer la coiffe sur l'interface.

L'interface peut être déformable de façon à contribuer au confort d'assise.

Dans des exemples, la deuxième couche peut comprendre une épaisseur au moins deux fois, préférentiellement au moins cinq fois, encore préférentiellement au moins dix fois supérieure à l'épaisseur de la troisième couche. La deuxième couche peut être obtenue par un procédé de lamination, et peut être notamment du type d'un « feutre » en polyester. La deuxième couche peut comprendre une résine liante. La deuxième couche peut également être en polyester. La deuxième couche peut comprendre au moins 95% de polyester. La troisième couche peut être obtenue par un procédé de tissage de fibre polyester entre-elles.

Dans un exemple, l'épaisseur de la coiffe, qui représente l'addition de l'épaisseur de la deuxième couche et de l'épaisseur de la troisième couche, peut-être inférieure à l'épaisseur de la première couche de matelassure. La coiffe peut être deux fois, préférentiellement cinq fois, encore préférentiellement dix fois moins épaisse que la première couche de matelassure.

Selon un exemple, la deuxième couche comprend une masse surfacique comprise entre 80 et 400 g/m², préférentiellement comprise entre 100 et 250 g/m².

Selon un exemple, la deuxième couche comprend une perméabilité à l'air supérieure à 1500 L/m²/s.

### Brève description des dessins

D'autres caractéristiques, détails et avantages apparaîtront à la lecture de la description détaillée ci-après, et à l'analyse des dessins annexés, sur lesquels :
**Fig. 1**

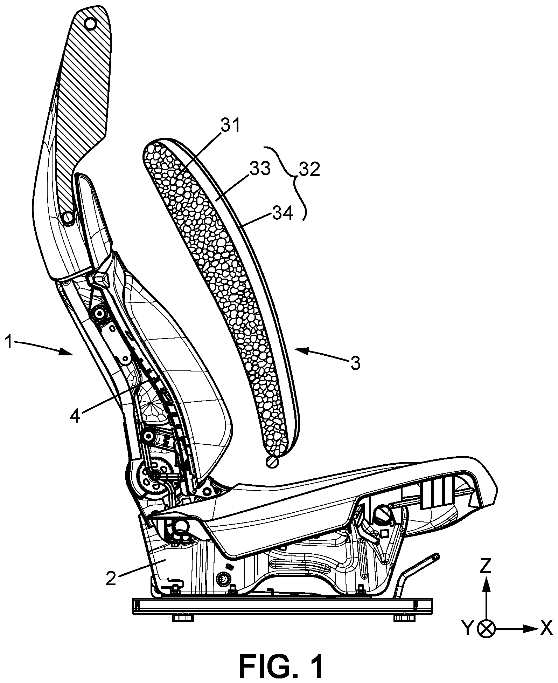

   [Fig. 1] montre une représentation schématique d'une garniture selon un exemple de la présente divulgation, destiné à équiper un dossier de siège.
**Fig. 2**

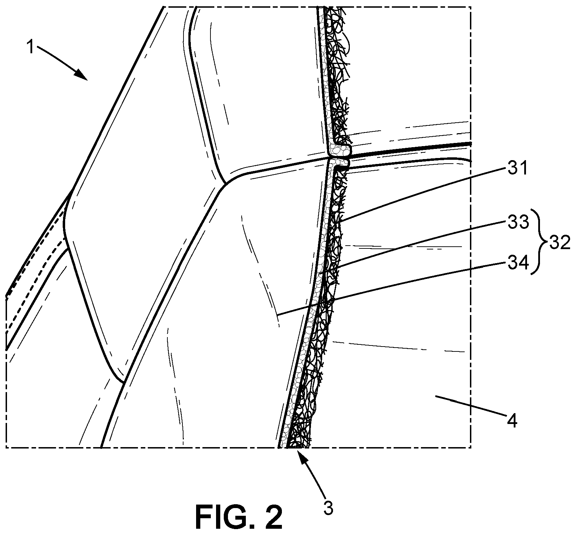

   [Fig. 2] montre une coupe transversale en perspective d'une garniture selon un exemple, équipant un dossier de siège.
**Fig. 3**

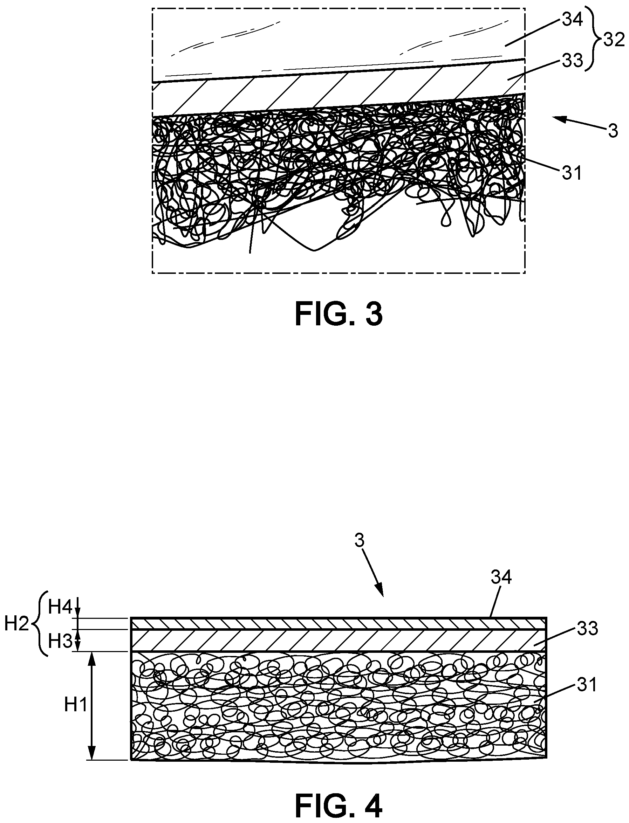

   [Fig. 3] montre une coupe transversale en perspective d'une garniture selon un exemple dans laquelle les trois couches sont particulièrement visibles.
**Fig. 4**
   [Fig. 4] montre une représentation schématique plane d'une coupe transversale d'une garniture selon un exemple.
**Fig. 5**

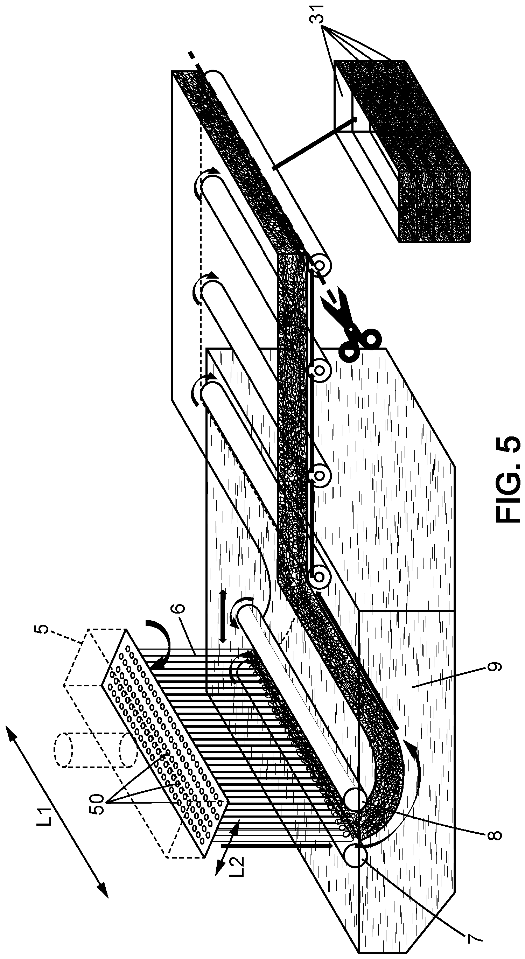

   [Fig. 5] montre une représentation schématique d'une partie d'un procédé d'obtention d'une garniture selon un exemple de la présente divulgation.
**Fig. 6**

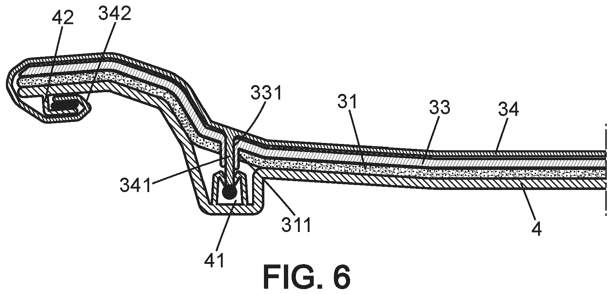

   [Fig. 6] montre une représentation schématique en coupe d'une garniture fixée sur une interface de siège de véhicule selon un exemple de la présente divulgation.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un élément de siège de véhicule ou d'un siège de véhicule dans sa position normale d'utilisation.

Il est maintenant fait référence à la figure 1, sur laquelle est illustré un siège 1 comprenant une structure 2 typiquement métallique, pouvant comprendre des parties en plastique, et une garniture 3 selon un exemple de la présente divulgation destinée à équiper un dossier du siège 1.

Le châssis de dossier comprend typiquement des montants latéraux, s'étendant en hauteur, ainsi qu'une traverse supérieure reliant deux extrémités supérieures des montants. Les montants et la traverse supérieure sont typiquement des tôles conformées, par exemple par les techniques d'emboutissage.

Le dossier de siège 1 comporte notamment une interface 4, en particulier ici une interface de dossier. Il est tout de même envisageable de prévoir une interface semblable pour une partie d'assise de siège sur laquelle une garniture selon la présente divulgation serait appliquée. Celle-ci peut comprendre un matériau entièrement ou partiellement en plastique. Par exemple, ladite interface 4 est en ABS (acrylonitrile butadiène styrène) et/ou PC (Polycarbonate) et/ou P/E (Copolymère Polypropylène/Polyéthylène).

Dans d'autres exemple, l'interface peut comprendre une nappe de suspension métallique.

De manière générale, l'interface 4, ici de dossier, peut comprendre une coque. La coque peut être une pièce moulée ou une pièce thermoformée.

La garniture 3 selon la présente divulgation comporte :
- Une première couche de matelassure 31 comprenant un enchevêtrement 3D de fibres de polyester, continues disposées irrégulièrement formant des boucles soudées entre elles,

Les fibres de l'enchevêtrement 3D de polyester de la première couche 31 de matelassure peuvent être des fibres creuses et/ou fibres pleines. Les fibres peuvent être de diamètre compris entre 0,2 mm et 2 mm, préférentiellement entre 0,3 mm et 1,5 mm. On entend par « continues » dans « fibres continues » le fait que les fibres sont de longueur très supérieure au diamètre des fibres, et du fait du procédé qui est décrit ci-après, typiquement au moins d'un rapport 100, voire 500, voire 1000. Bien souvent, et notamment comme compréhensible du procédé de fabrication, les fibres s'étendent typiquement depuis une première extrémité sur un premier bord de l'enchevêtrement 3D et jusqu'à une deuxième extrémité sur un deuxième bord de l'enchevêtrement 3D, opposé au premier bord.

De préférence, les vides entre les fibres de l'enchevêtrement 3D de fibres de la première couche 31 de matelassure sont laissés libres. On obtient ainsi une matelassure très respirante, en raison des nombreux inter-espaces entre les fibres qui favorisent la circulation d'air.

La garniture selon la présente divulgation comporte également une coiffe 32, comprenant :
∘ Une deuxième couche 33 comprenant des fibres de polyester non-tissés,
∘ Une troisième couche 34 d'aspect comprenant des fibres de polyester tissées entre-elles,

La deuxième couche comporte un enchevêtrement de fibres en polyester non-tissées entre elles. Elle peut notamment être obtenue par un procédé de lamination, et être du type d'un « feutre » en polyester. Elle peut éventuellement comprendre une résine liante.

La troisième couche peut comprendre des fibres de polyester tissées ou tricotées entre elles. Elle peut aussi avoir une enduction de polyester en surface. La troisième couche présente une résistance à l'abrasion, à la lumière, et à l'usure en général qui lui permet de conserver son aspect tout au long de la vie du véhicule.

La deuxième couche et la troisième couche peuvent être collées entre elles.

Les figure 2 et 3 montrent une modélisation 3D d'une garniture selon un exemple de la présente divulgation.

L'interface 4 est particulièrement visible en figure 2, en particulier, ladite interface 4 est ici une interface 4 de dossier, et peut comprendre :
- au moins une coque déformable de dossier recevant la garniture 3, ladite coque déformable étant configurée pour prendre différentes formes notamment depuis une position initiale de lordose lombaire et en particulier jusqu'à une position finale de cyphose lombaire, en réponse à une charge variable appliqué par le dos de l'occupant du siège,
- un système couplant ladite coque déformable de dossier à la structure comprenant des liens supérieurs de contrôle de déplacement, et des liens inférieurs de contrôle de déplacement.

La figure 4 montre une représentation schématique d'un exemple de garniture 3 selon la présente divulgation.

Dans cet exemple, l'épaisseur H2 de la coiffe, qui représente l'addition de l'épaisseur de la deuxième couche H3 et de l'épaisseur de la troisième couche H4, peut-être inférieure à l'épaisseur de la première couche de matelassure H1.

La coiffe peut être deux fois, préférentiellement trois fois moins épaisse que la première couche de matelassure.

Selon des exemples, la troisième couche comprend une épaisseur H4 comprise entre 1 et 3mm.

Selon des exemples, la deuxième couche comprend une épaisseur H3 comprise entre 2 et 5mm, ou encore comprise entre 2 et 10mm selon le besoin d'augmenter le confort.

Selon des exemples, la première couche de matelassure comprend une épaisseur H1 égale à 30mm.

Il est maintenant fait référence à la figure 5, qui représente un exemple de procédé de fabrication de la première couche de matelassure selon la présente divulgation. Le procédé comporte une extrusion d'un polymère thermoplastique, notamment un polyester, dans une filière d'extrusion 5 de l'installation. La filière d'extrusion 5 peut notamment être alimentée en granulés de polymère thermoplastique, notamment de polyester, par exemple issu d'un procédé de recyclage.

La filière d'extrusion 5 comprend des buses d'extrusion 50, réparties suivant une direction L1 en longueur et suivant une direction L2 en largeur de la filière d'extrusion 5. En /A1/, La filière d'extrusion 5, à partir du polymère thermoplastique P, génère un rideau 6 de fibres continues fondues, chutant par gravité. Le rideau 6 de fibres continues fondues passe alors entre deux organes de guidage 7, 8 contrarotatifs, avec une génération d'un enchevêtrement 3D de fibres selon une répartition irrégulière, ou aléatoire, avec fusion de boucles entre les fibres continues et selon une couche d'épaisseur totale et déterminée par l'entraxe entre lesdits deux organes de guidage 7, 8.

En /A2/, les deux organes de guidage 7, 8 sont entrainés en rotation à une vitesse typiquement inférieure à la vitesse de chute des fibres, assurant une accumulation des fibres à l'origine de la formation de boucles qui se thermosoudent entre fibres, générant l'enchevêtrement irrégulier, aléatoire, en trois dimensions.

Enfin, il y a solidification de l'enchevêtrement 3D de fibres par immersion dans un liquide de refroidissement 9 pour former une matelassure, qui, après une éventuelle opération de découpe, permet d'obtenir la première couche de matelassure 31. La solidification est obtenue juste après l'étape /A2/, les deux organes de guidage pouvant être immergés à mi-hauteur dans le liquide de refroidissement, à cet effet.

La couche d'enchevêtrement 3D de fibres, en défilement continu, est ensuite guidée, en dehors du réservoir de liquide de refroidissement pour être séchée, typiquement par des secousses/vibrations. La couche en défilement est ensuite découpée, par des coupes transversales, permettant l'obtention de différentes premières couches de matelassures 31, et comme visibles à la figure 5.

Selon les constations de l'inventeur, la première couche de matelassure 31 obtenue à l'issue du procédé illustré à la figure 5 présente une masse volumique apparente comprise entre 20kg/m³ et 70 kg/m³, en particulier entre 45 kg/m³ et 60 kg/m³, préférentiellement entre 35 et 70kg/m3, et de manière sensiblement homogène. Une telle densité de matelassure est optimisée pour assurer un confort et un soutien de l'occupant.

Concernant la coiffe, la deuxième couche 33 peut être fabriquée selon le procédé suivant :
- Dépôt de fibres en matelas sur un tapis,
- Enchevêtrement de ces fibres par des aiguilles perpendiculaires au matelas,
- Éventuellement calandrage à chaud,
- Et éventuellement aussi tricotage supplémentaire.

La troisième couche 34 peut être fabriquée selon le procédé suivant :
- Tissage en chaine et trame de fils polyester
- Ou tricotage de fils polyester
- Ou tissage ou tricotage, recouvert par une enduction 90% polyester.

La coiffe 32 peut ensuite être rapportée par-dessus la première couche de matelassure de façon à la recouvrir, et se fixer à l'interface 4.

La figure 6 montre une vue en coupe de la garniture et de l'interface 4. Il est montré notamment un exemple d'assemblage de la coiffe 32 sur la première couche de matelassure 31.

La troisième couche 34 est typiquement collée à la deuxième couche 33. Comme la troisième couche comprend un élément d'accroche 341 faisant saillie vers l'intérieur de la garniture, il est prévu une ouverture 331 à travers la deuxième couche pour permettre à l'élément d'accroche de déboucher hors de la coiffe 32, vers l'intérieur du siège. Un passage 311 traversant est aménagé à travers la première couche de matelassure 31, le passage 311 étant configuré pour laisser passer ledit élément d'accroche 341 débouchant de l'ouverture 331 de la deuxième couche 33, de façon à ce qu'il puisse atteindre une zone d'accrochage 41 ménagée sur l'interface 4.

L'élément d'accroche 341 comporte des moyens pour se solidariser à la zone d'accrochage 41, par exemple des moyens de clippage, afin de permettre un démontage aisé de la coiffe et/ou de l'entièreté de la garniture. L'élément d'accroche 341 est préférentiellement en polyester. L'élément d'accroche comprend au moins 92% de polyester, préférentiellement au moins 95% de polyester.

L'élément d'accroche 341 peut être du type d'un rappel de garnissage, également appelé « tie down » en anglais. Selon un exemple, les éléments d'accroche 341 sont des éléments de fixation (comprenant une sangle ou une partie non-tissée en polyester) qui sont fixés sur la coiffe a une première extrémité et comporte un élément rigide à une deuxième extrémité.

L'interface 4 comporte également une zone de fixation périphérique 42 aménagée en bordure de l'interface 4. Ladite bordure est par exemple un bord périphérique de l'interface 4. La troisième couche 34 comprend une partie rigide 342, par exemple cousue, configurée pour se loger dans la zone de fixation périphérique 42, à la manière d'un rembordement. Pour les bords périphériques de l'interface, la partie rigide 342 peut être cousue directement sur la coiffe 32, et rabattue dans la zone de fixation périphérique 42 de manière à rester coincée lors de l'utilisation du siège.

Selon un exemple, un procédé de fixation de la garniture 3 sur le siège 1 comporte :
- /B1 Pose de la première couche de matelassure 31 sur l'interface 4,
- /B2/ Passage de l'élément d'accroche 341 à travers le passage 311 de la première couche de matelassure 31 pour le fixer aux zones d'accrochage 41 de l'interface 4.
- /B3/ Fixation des bords périphériques de la coiffe 32 sur l'interface 4 par coopération entre la partie rigide 342 et la zone de fixation périphérique 42.

Ledit procédé peut comprendre, préalablement à /B2/, le collage de la troisième couche 34 à la deuxième couche 33, avec le passage de l'élément d'accroche à travers l'ouverture 331 de la deuxième couche 33.

La première couche de matelassure 31 est alors au moins partiellement recouverte par la coiffe 32. L'assemblage entre la coiffe 32 et l'interface 4 est démontable. Il est possible, selon des exemples, de « déclipper » l'élément d'accroche 341 de la zone d'accrochage 41. Il est possible, selon des exemples, de solliciter la partie rigide 342 hors de la zone de fixation périphérique 42.

## Revendications

1. Garniture (3) comprenant :
- Une première couche (31) de matelassure comprenant un enchevêtrement 3D de fibres de polyester, continues disposées irrégulièrement formant des boucles soudées entre elles,
- Une coiffe (32) comprenant :
∘ Une deuxième couche (33) comprenant des fibres de polyester non-tissés,
∘ Une troisième couche (34) d'aspect comprenant des fibres de polyester tissées ou tricotées entre-elles,
chacune des première et deuxième couches (31, 33) comprenant au moins 95% de polyester, la troisième couche (34) comprenant au moins 92% de polyester.

2. Garniture (3) selon la revendication précédente, dans laquelle la deuxième couche est collée à la troisième couche, préférentiellement avec une colle thermofusible, la colle comprenant préférentiellement au moins 95% de polyester.

3. Garniture (3) selon l'une des revendications précédentes, dans laquelle la coiffe comprend un élément d'accroche (341) configuré pour fixer la coiffe (32) à une interface (4) d'un siège de véhicule (1), préférentiellement l'élément d'accroche (341) comprenant au moins 95% de polyester.

4. Garniture (3) selon la revendication précédente, la première couche (31) de matelassure comprenant un passage (311) traversant, l'élément d'accroche (341) étant configuré pour coopérer avec une zone d'accrochage (41) de l'interface (4) en passant à travers ledit passage (311) de la première couche (31) de matelassure.

5. Garniture (3) selon l'une des revendications précédentes, dans laquelle la deuxième couche (33) comprend une épaisseur (H3) au moins deux fois supérieure à l'épaisseur (H4) de la troisième couche (34).

6. Garniture (3) selon la revendication précédente, dans laquelle la deuxième couche (33) comprend une épaisseur (H3) comprise entre 2 et 10mm, préférentiellement entre 2 et 5mm.

7. Siège de véhicule (1) comprenant une partie de dossier et une partie d'assise liées à une structure de siège de véhicule (1), au moins l'une des parties de dossier et d'assise comprenant une garniture (3) selon l'une quelconque des revendications précédentes.

8. Procédé de fabrication d'une garniture (3) selon l'une des revendications 1 à 6 dans lequel la fabrication de la première couche (31) comprend :
- /A1/ Extrusion d'un polymère thermoplastique dans une filière d'extrusion comprenant des buses d'extrusion réparties suivant une direction en longueur et suivant une direction en largeur de la filière d'extrusion, générant un rideau de fibres continues fondues, chutant par gravité,
- /A2/ Réception du rideau de fibres continues fondues chutant par gravité sur un ou des élément support avec une génération d'un enchevêtrement 3D de fibres disposées irrégulièrement avec fusion de boucles entre les fibres continues,
- /A3/ éventuellement solidification de l'enchevêtrement 3D de fibres par immersion dans un liquide de refroidissement.

9. Procédé de fixation d'une garniture (3) selon l'une des revendications 1 à 6 en combinaison avec la revendication 4, sur un siège de véhicule (1) selon la revendication 7, le siège (1) comprenant une interface (4) comprenant une zone d'accrochage (41), le procédé de fixation comprenant :
- /B1/ Pose de la première couche de matelassure (31) sur l'interface (4),
- /B2/ Passage de l'élément d'accroche (341) à travers le passage (311) de la première couche de matelassure (31) pour le fixer aux zones d'accrochage (41) de l'interface (4).

10. Procédé de recyclage d'un siège de véhicule (1) selon la revendication 7 comprenant :
- Séparation de l'au moins une garniture (3) de la structure de siège (1),
- Broyage de l'entièreté de l'au moins une garniture (3), sans opération préalable de séparation de couche ou d'élément de couche, en vue d'obtenir du polyester sous forme de granulés,
- Réutilisation d'au moins une partie des granulés de polyester pour la fabrication d'un produit comprenant du polyester.
